# EUROPÄISCHE PATENTANMELDUNG

(11) **EP 0 762 098 A1**
(43) Veröffentlichungstag der Anmeldung: **12.03.1997**
(21) Anmeldenummer: 96111734.8
(22) Anmeldetag: 20.07.1996
(51) Int. Cl.: G01L 23/22, F02D 41/00, F02P 5/152

(54) **Klopfintensitätssignals aus Höhe und Lage eines differenzierten Brennraumlichtsignals**

(30) Priorität: 24.08.1995 AT 1424/95
(71) Anmelder: JENBACHER ENERGIESYSTEME AG, A-6200 Jenbach (AT)
(72) Erfinder: Prockstaller, Franz, 6200 Jenbach (AT); Lang, Christian, 6200 Jenbach (AT)
(74) Vertreter: Torggler, Paul, Dr.

(57) **Zusammenfassung**

Verfahren und Einrichtung zum sicheren und davorhaften Ermitteln eines Klopfintensitätssignals eines Verbrennungsmotors, bei dem über einen in den Brennraum reichenden optischen Aufnehmer und über einen Photodetektor ein der Lichtemission im Brennraum entsprechendes, elektrisches Lichtsignal gewonnen und anschließend ausgewertet wird, wobei digital nach einer Normierung und scharfen Tiefpreßfilterung zunächst die erste Ableitung des elektrischen Lichtsignals gebildet und danach deren Höhe (25) und Lage in Bezug auf Nulldurchgänge (26,27) bewertet werden, Regelung des Zündzeitpunkts oder des Kraftstoff-Luft-Verhältnisses.

## Beschreibung

Die Erfindung betrifft ein Verfahren und eine Einrichtung zum Ermitteln eines Klopfintensitätssignals eines Verbrennungsmotors, bei dem über einen in den Brennraum reichenden optischen Aufnehmer und über einen Photodetektor ein der Lichtemission im Brennraum entsprechendes, elektrisches Lichtsignal gewonnen und anschließend ausgewertet wird, wobei die Höhe des Maximums der ersten Ableitung des Lichtsignals in einem vordefinierten Winkelmarkenfenster gewonnen wird.

Um den Betriebszustand eines Verbrennungsmotors zu erfassen, ist es bereits bekannt, einen in den Brennraum reichenden optischen Aufnehmer vorzusehen, über den es möglich ist, die bei der Verbrennung im Brennraum entstehende Lichtemission zu erfassen. Ein Photodetektor wandelt dann das vom optischen Aufnehmer aufgenommene Licht in ein entsprechendes elektrisches Lichtsignal um, das anschließend ausgewertet wird.

Bisher hatte man häufig das Problem, daß es im Lauf der Zeit zu einer Verschmutzung des optischen Aufnehmers kommt und damit eine Verfälschung der Meßergebnisse eintritt.

Aufgabe der Erfindung ist es daher, ein Verfahren und eine Vorrichtung der eingangs genannten Gattung anzugeben, mit der sich auch über längere Benutzungszeiträume ein aussagekräftiges Klopfintensitätssignal ermitteln läßt.

Erfindungsgemäß ist das Verfahren dadurch gekennzeichnet, daß das Klopfintensitätssignal aus der zeitlichen Lage und der Höhe des Maximums der ersten Ableitung des Lichtsignals gebildet wird. Dementsprechend ist die erfindungsgemäße Einrichtung dadurch gekennzeichnet, daß die Auswerteinrichtung eine Einrichtung zum Ermitteln der Höhe und Lage des Maximums der in der Einrichtung zum Differenzieren gebildeten ersten Ableitung des elektrischen Licht-signals umfaßt.

Das Differenzieren eines Lichtsignales aus dem Brennraum eines Verbrennungsmotors ist an sich bekannt. So wird beispielsweise gemäß dem Vorschlag der DE-ES 31 11 135 das differenzierte Signal zum Erkennen charakteristischer Punkte wie der Lage des Brennbeginns und des Lichtmaximums verwendet. Gemäß der DE-OS 34 10 067 wird der Gradient zur Extremwertzählung erfaßt und eine Korrelation mit einem Musterverlauf zur Ermittlung der unregelmäßigen Verbrennung hergestellt. Bei der DE-OS 29 05 506 wird das differenzierte Signal zur Erkennung der Lage des Brennbeginns verwendet und darauf eine Brennbeginnregelung aufgebaut. Demgegenüber wird beim Erfindungsgegenstand das differenzierte Lichtsignal, also die erste Ableitung des elektrischen Lichtsignals dazu verwendet, ein Signal zu gewinnen, das die Klopfintensität des Verbrennungsmotors angibt. Durch das Bilden der ersten Ableitung und Auswertung derselben ist es möglich, im wesentlichen unabhängig von einer Sondenverschmutzung über längere Zeit ein Aussagekräftiges Klopfintensitätssignal zu gewinnen.

Mit dem Klopfintensitätssignal kann vorteilhaft über eine Regeleinrichtung beispielsweise der Zündzeitpunkt oder das Kraftstoff-Luft-Verhältnis geregelt werden, um eine "optische" Klopfregelung aufzubauen.

Weitere Vorteile und Einzelheiten der Erfindung werden anhand der nachfolgenden Figurenbeschreibung näher erläutert.

Es zeigen:

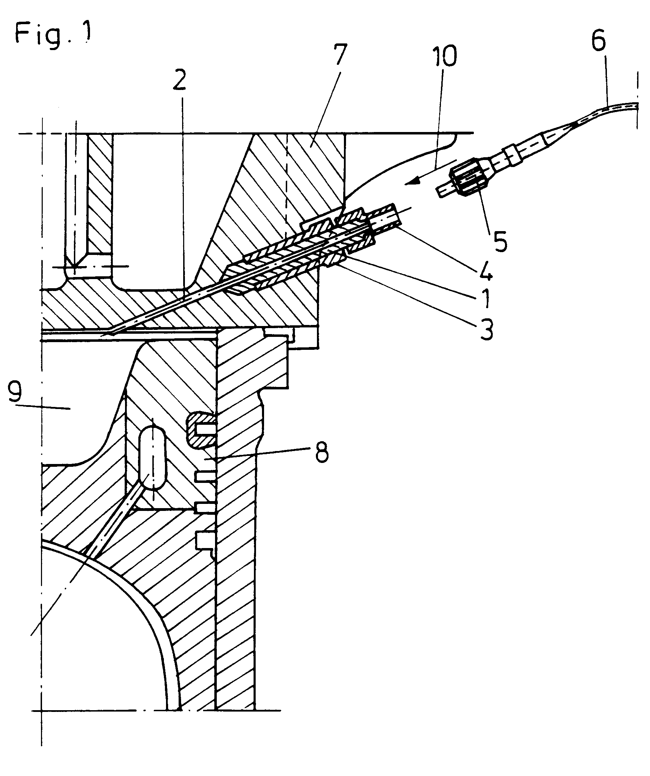

Fig. 1 einen schematischen Querschnitt durch den Zylinderkopfbereich eines Zylinders mit eingesetztem optischen Aufnehmer,
Fig. 2 ein Blockschaltbild eines Ausführungsbeispiels einer erfindungsgemäßen Einrichtung zum Ermitteln eines Klopfintensitätssignales,
Fig. 3 ein Flußdiagramm eines bevorzugten Ausführungsbeispiels des erfindungsgemäßen Verfahrens,
Fig. 4 den Verlauf der ersten Ableitung bei einer nichtklopfenden Verbrennung,

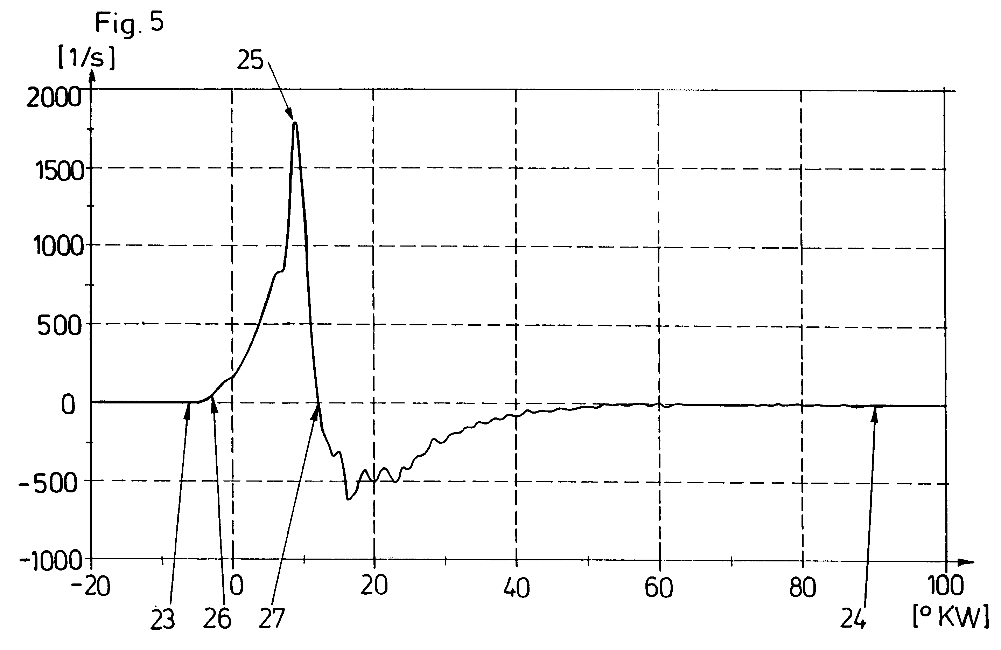

Fig. 5 den Verlauf der ersten Ableitung bei einer klopfenden Verbrennung,
Fig. 6 einen Verlauf des Bewertungsfaktors B über der in Prozenten aufgetragenen relativen Lage des Maximums der ersten Ableitung des elektrischen Lichtsignales.

Der insgesamt mit 1 bezeichnete optische Aufnehmer (Sonde) ist in dem Zylinderkopf 7 eines Zylinders eines Verbrennungsmotors eingesetzt und mittels einer Überwurfmutter 3 gehalten. Der optische Aufnehmer 1 umfaßt einen lichtleitenden Glasstab 2, der bis in den Brennraum 9 oberhalb des Kolbens 8 reicht. Außerdem umfaßt der optische Aufnahmer einen Lichtwellenleiter-Steckeradapter 4, der es ermöglicht, an das äußere Ende des Glasstabes 2 einen Lichtwellenleiter, insbesondere in der Form einer flexiblen Lichtleitfaser 6 über einen Lichtwellenleiterstecker 5 lösbar anzuschließen. Dazu muß lediglich der Lichtwellenleiterstecker 5 in Richtung des Pfeiles 10 in den Lichtwellenleiter-Steckeradapter 4 eingesteckt werden. Damit ist es möglich, daß Licht, das bei der Verbrennung im Brennraum 9 entsteht, zunächst über den Glasstab 2 und dann über die flexible Lichtleitfaser 6 einer Auswerteinrichtung zugeführt wird. Die flexible Lichtleitfaser erlaubt eine entfernte Aufstellung der elektronischen Auswerteinrichtung und kann im Falle von Beschädigungen leicht ausgetauscht werden.

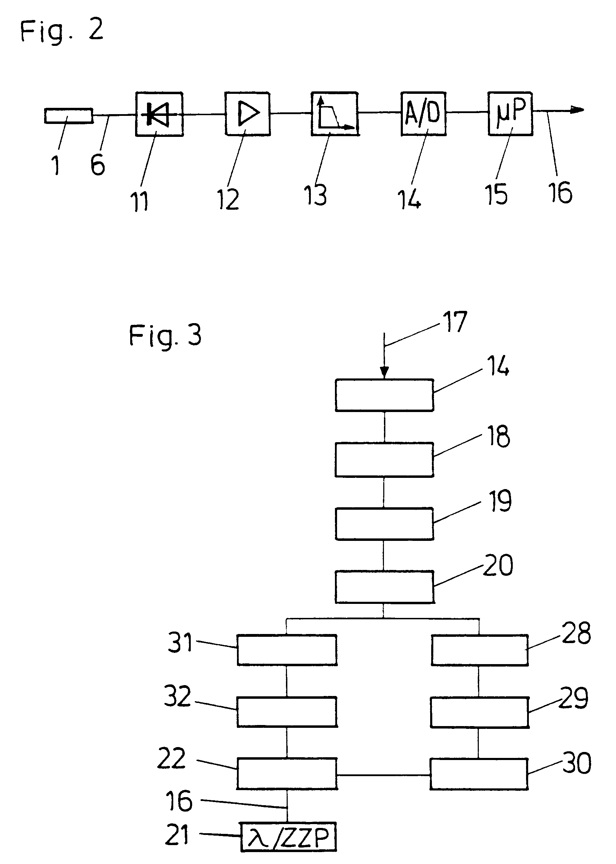

Gemäß Fig. 2 wird das von der Sonde 1 aufgenommene Licht über die Lichtleitfaser 6 einem Photodetektor 11 (beispielsweise einer Photodiode) zugeführt, die das Lichtsignal in ein elektrisches Lichtsignal umwandelt. Dieses wird dann in einem Verstärker 12 verstärkt und über ein Tiefpaßfilter 13, der beispielsweise eine Grenzfrequenz von 4kHz (allgemein unter der halben Abtastfrequenz des A/D Wandlers) aufweist, geführt. Das Tiefpaßfilter 13 stellt sicher, daß im elektrischen Lichtsignal vorhandene höhere Frequenzen zu keinen Abtastfehlern bei der anschließenden Digitalisierung des elektrischen Lichtsignals im Analog-Digitalwandler 14 führen. Schließlich gelangt das digitalisierte elektrische Lichtsignal in eine digitale Auswerteinrichtung 15 (beispielsweise ein digitaler Mikroprozessor), die erfindungsgemäß unter Bildung der ersten Ableitung des elektrischen Lichtsignales ein Klopfintensitätssignal ermittelt und auf der Ausgangsleitung 16 ausgibt, wie dies im folgenden noch näher beschrieben werden wird.

Ein Ausführungsbeispiel einer (digital) elektronischen Signalverarbeitung des elektrischen Lichtsignals ist in Fig. 3 dargestellt. Zunächst wird das verstärkte und tiefgepaßte analoge elektrische Lichtsignal über die Leitung 17 einem Analogdigitalwandler 14 zugeführt, der innerhalb eines vorgegebenen Winkelmarkenfensters eine Analogdigitalwandlung des elektrischen Lichtsignales vornimmt. Unter einem Winkelmarkenfenster wird dabei ein vorbestimmter Bereich des Kurbelwellenwinkels verstanden, innerhalb dessen die Verbrennung stattfindet. Das nunmehr digital vorliegende elektrische Lichtsignal wird nun nochmals über einen scharfen elektronischen Tiefpaßfilter 18 geleitet und anschließend auf 1 (bzw. allgemein auf einen konstanten Wert) normiert. Die Normierung erfolgt in der Stufe 19 und zwar dadurch, daß das elektrische Lichtsignal eines Verbrennungszyklusses vollständig eingelesen und gespeichert wird und darauf in die Höhe des Maximums ermittelt wird. Schließlich erfolgt die Bildung des normierten elektrischen Lichtsignals dadurch, daß alle aktuellen Werte durch den Wert des Maximums dividiert werden, wodurch das Maximum des normierten Lichtsignals den Wert 1 erhält und alle anderen Werte zwischen 0 und 1 liegen. Diese Normierung trägt dazu bei, daß man von der Sondenverschmutzung unabhängig wird. Anschließend wird in der Einrichtung 20 erfindungsgemäß die erste Ableitung nach der Zeit vom normierten elektrischen Lichtsignal gebildet. Aus dieser ersten Ableitung nach der Zeit wird nun - wie noch näher erläutert werden wird - ein Klopfintensitätssignal gewonnen, das auf der Leitung 16 an eine Regeleinrichtung 21 ausgegeben wird, die beispielsweise in Abhängigkeit vom Klopfintensitätssignal als Istwert, das Kraftstoff-Luft-Verhältnis Lambda oder den Zündzeitpunkt wählt.

Zur Gewinnung des Klopfintensitätssignales wird das Maximum der ersten Ableitung des Lichtsignales in einem vordefinierten Winkelmarkenfenster ausgeweret. Dabei wird sowohl die zeit- bzw. kurbelwellenwinkelmäßige Lage des Maximums als auch dessen Höhe verarbeitet. Dabei wird in dem in Fig. 3 linken Verarbeitungszweig die Höhe des Maximums verwertet und in dem in Fig. 3 rechten Verarbeitungszweig dessen Lage und schließlich gemeinsam im Schritt 22 die Klopfintensitätszahl berechnet.

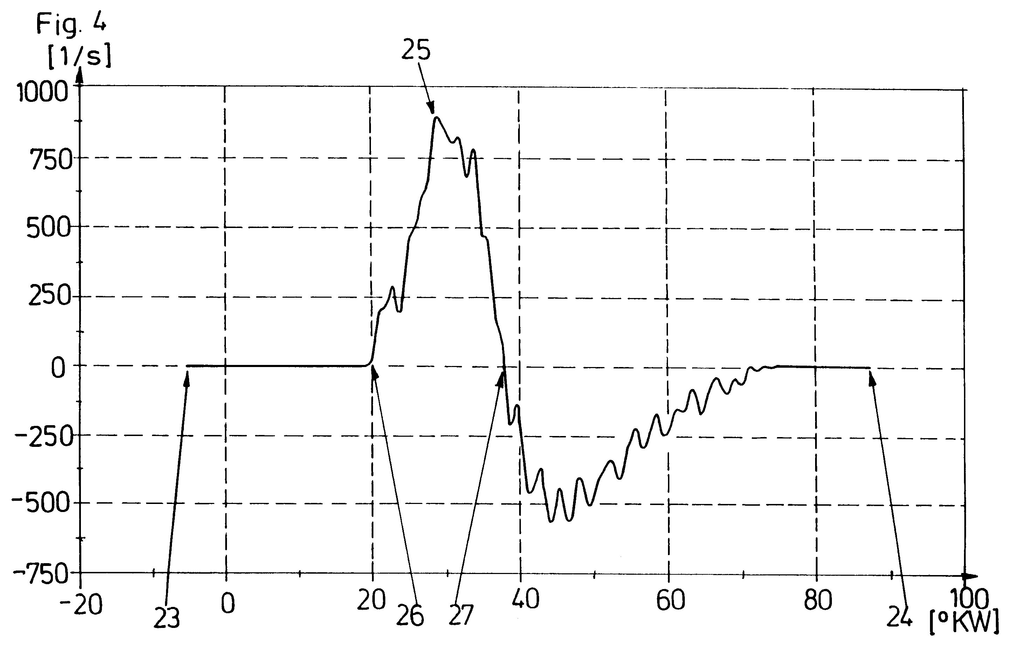

In der Fig. 4 ist der Verlauf der ersten Ableitung des normierten elektrischen Lichtsignales einer nichtklopfenden Verbrennung über den Kurbelwellenwinkel aufgetragen. Mit 23 ist der Beginn und mit 24 ist das Ende des Winkelmarkenfensters gekennzeichnet, in dem überhaupt eine Signalauswertung erfolgt. Aus dem in einem Speicher eingelesenen Signal wird dann das Maximum 25 ermittelt, sowie der Signalbeginn 26 und das positive Signalende 27. Dabei ist der Signalbeginn 26 als erstmaliges Überschreiten eines vorzugsweise einstellbaren geringen Schwellwertes der ersten Ableitung definiert. Das positive Signalende ist als erster Nulldurchgang der ersten Ableitung nach dem Signalmaximum 25 definiert. Die Punkte 26 und 27 definieren den Beginn und das Ende einer relativen Zeit- bzw. Kurbelwellenwinkelskala bezüglich der die Lage des Maximums 25 festgelegt wird, wobei der Signalbeginn 26 mit 0% definiert ist und das positive Signalende mit 100%. Bei dem in Fig. 4 dargestellten Ausführungsbeispiel liegt das Maximum 25 (relative Lage bezüglich der Punkte 26 und 27) bei etwa 50%. Diese relative Lageermittlung in Prozenten bezüglich des Signalbeginns 26 und des positiven Signalendes 27 erfolgt im Schritt 28 gemäß Fig. 3.

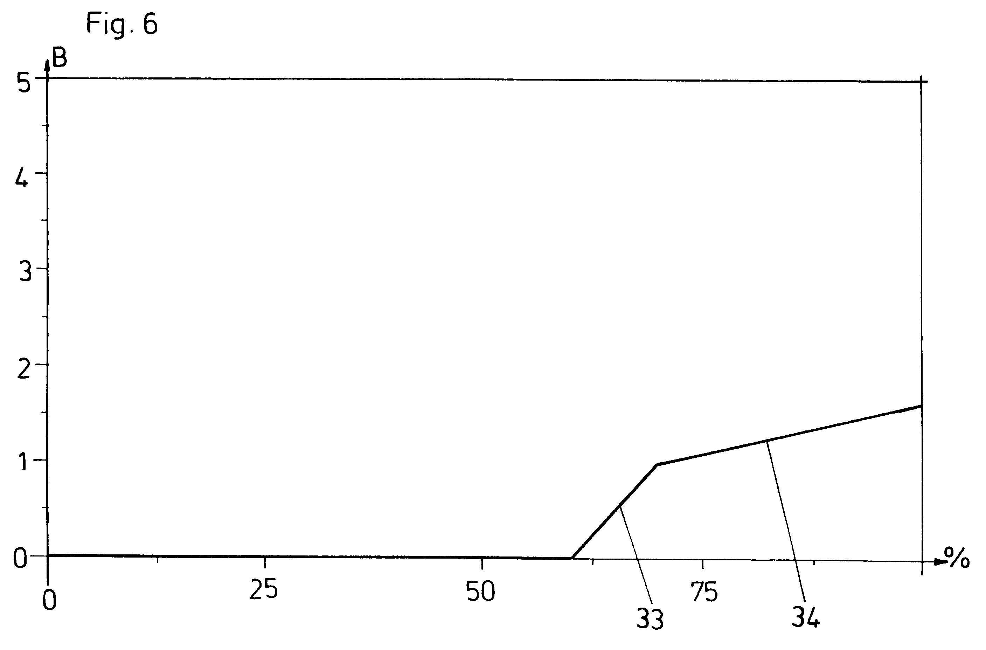

Wenn man nun die erste Ableitung des normierten elektrischen Lichtsignales einer klopfenden Verbrennung mit der Normalverbrennung in Fig. 4 vergleicht, so stellt man fest, daß einerseits die Höhe des Maximums größer ist und andererseits die relative Lage des Maximums bezüglich der beiden Punkte 26 und 27 wesentlich näher beim positiven Signalende 27, also beispielsweise bei etwa 70 bis 80% auf der relativen Lageskala zwischen den Punkten 26 und 27 liegt. Diese Erhöhung des Maximums der ersten Ableitung und seine Verschiebung in die Nähe des Punktes 27 bei klopfender Verbrennung kann nun verwendet werden, um daraus ein Klopfintensitätssignal zu gewinnen. Dazu wird zunächst aus der relativen Lage des Maximums 25 der ersten Ableitung ein Bewertungsfaktor B generiert und zwar im Schritt 30 gemäß Fig. 3 nach einer Mittelung in der Mittelwertbildungseinrichtung 29. Die Mittelung erfolgt über mehrere (beispielsweise 30) Verbrennungszyklen. Der Bewertungsfaktor B wird dann beispielsweise gemäß einer vorgespeicherten Kurve, wie sie in Fig. 6 dargestellt ist, ermittelt und zwar in Abhängigkeit von der mittleren relativen Lage des Maximums der ersten Ableitung des normierten Lichtsignales. Dieser Bewertungsfaktor wird dann im Schritt 22 mit der im Schritt 31 ermittelten und im Schritt 32 gemittelten Höhe des Maximums der ersten Ableitung multipliziert, um die gewünschte Klopfintensitätszahl zu erhalten.

Aus dem Verlauf des in Fig. 6 dargestellten Bewertungsfaktors sieht man, daß dieser bis etwa 60% der relativen Lage des Maximums zwischen den beiden Punkten 26 und 27 gleich Null ist, das heißt, daß in diesem Fall auch die Klopfintensitätszahl gleich Null ist, unabhängig davon, wie hoch das Maximum ist. Erst wenn das Maximum der ersten Ableitung näher zum positiven Signalende 27 rückt, also die prozentmäßige relative Lage über ca. 60% liegt, steigt der Bewertungsfaktor an und zwar zunächst in einem steileren linearen Übergangsbereich 33 und einem anschließenden flacheren Bereich 34. Wenn die relative Lage des Maximums in dem Bereich der Kurven 33 und 34 fällt, ist der Bewertungsfaktor von Null verschieden und es ergibt sich in Abhängigkeit von der Lage (Bewertungsfaktor) und der Höhe des Maximums der ersten Ableitung eine von Null verschiedene Klopfintensitätszahl, die einen klopfenden Betrieb anzeigt und in Abhängigkeit von der eine Regelung von Motorparametern möglich ist, die auf das Klopfverhalten einen Einfluß haben.

Die Erfindung ist nicht auf das dargestellte Ausführungsbeispiel beschränkt, beispielsweise wäre es auch möglich, lediglich die Lage oder alternativ die Höhe der ersten Ableitung des elektrischen Lichtsignales auszuwerten. Allerdings ist eine zuverlässigere quantitative Klopferkennung möglich, wenn man sowohl die Lage als auch die Höhe des Maximums der ersten Ableitung zur Ermittlung der Klopfintensitätszahl heranzieht. Schließlich sollte noch erwähnt werden, daß die in den Fig. 2 und 3 dargestellten Stufen bzw. Schritte beim heutigen Stand der Technik natürlich in einem Rechner hauptsächlich softwaremäßig implementiert werden können.

## Patentansprüche

1. Verfahren zum Ermitteln eines Klopfintensitätssignals eines Verbrennungsmotors, bei dem über einen in den Brennraum reichenden optischen Aufnehmer und über einen Photodetektor ein der Lichtemission im Brennraum entsprechendes, elektrisches Lichtsignal gewonnen und anschließend ausgewertet wird, wobei die Höhe des Maximums der ersten Ableitung des Lichtsignals in einem vordefinierten Winkelmarkenfenster gewonnen wird, dadurch gekennzeichnet, daß das Klopfintensitätssignal aus der zeitlichen Lage und der Höhe des Maximums der ersten Ableitung des Lichtsignals gebildet wird.

2. Verfahren nach Anspruch 1, dadurch gekennzeichnet, daß als Maß für die Lage des Maximums der ersten Ableitung, dessen relative Lage zwischen Signalbeginn und positivem Signalende des über der Zeit bzw. dem Kurbelwellenwinkel aufgetragenen ersten Ableitungssignals verwendet wird, wobei der Signalbeginn als erstmaliges Überschreiten eines vorzugsweise einstellbaren Schwellwertes der ersten Ableitung definiert ist und das positive Signalende als erster Nulldurchgang der ersten Ableitung nach dem Signalmaximum der ersten Ableitung definiert ist.

3. Verfahren nach Anspruch 2, dadurch gekennzeichnet, daß aus der relativen Lage des Maximums der ersten Ableitung ein Bewertungsfaktor gebildet wird, der mit der Höhe des Maximums der ersten Ableitung multipliziert wird, um das Klopfinensitätssignal zu erhalten.

4. Verfahren nach Anspruch 3, dadurch gekennzeichnet, daß der Bewertungsfaktor vom Signalbeginn bis zu einem vorzugsweise einstellbaren, relativen Lageschwellwert gleich Null ist und ab diesem relativen Lageschwellwert bis zum Auswertende von Null verschieden ist.

5. Verfahren nach Anspruch 4, dadurch gekennzeichnet, daß der vorzugsweise einstellbare Lageschwellwert bei 40% bis 90% liegt, wobei der Signalbeginn des über der Zeit bzw. dem Kurbelwellenwinkel aufgetragenen ersten Ableitungssignals 0% entspricht und das positive Signalende 100% entspricht.

6. Verfahren nach Anspruch 4 oder 5, dadurch gekennzeichnet, daß der Bewertungsfaktor ab dem Lageschwellwert bis zum Auswertende als Funktion der relativen Lage zwischen Signalbeginn und positivem Signalende ansteigt.

7. Verfahren nach Anspruch 6, dadurch gekennzeichnet, daß der Anstieg des Bewertungsfaktors linear oder in stetig übergehenden linearen Abschnitten erfolgt.

8. Verfahren nach einem der Ansprüche 1 bis 7, dadurch gekennzeichnet, daß das elektrische Lichtsignal durch einen Tiefpaßfilter geführt wird, dessen Grenzfrequenz bei 5 kHz oder darunter liegt.

9. Verfahren nach einem der Ansprüche 1 bis 8, dadurch gekennzeichnet, daß das elektrische Lichtsignal - vorzugsweise auf Eins - normiert wird, bevor die erste Ableitung gebildet wird.

10. Verfahren nach einem der Ansprüche 1 bis 9, dadurch gekennzeichnet, daß bei der Auswertung der Höhe und/oder Lage des Maximums der ersten Ableitung ein über mehrere Verbrennungszyklen gemittelten Mittelwert für die Höhe und/oder die Lage des Maximums verwendet wird.

11. Verfahren zur Klopfregelung eines Verbrennungsmotors, bei dem gemäß einem Verfahren nach einem der Ansprüche 1 bis 10 ein Klopfintensitätssignal gewonnen und als Istwert einer Regeleinrichtung zugeführt wird, die einen das Klopfverhalten des Motors beeinflussenden Motorparameter, insbesondere den Zündzeitpunkt oder das Kraftstoff-Luft-Verhältnis, regelt.

12. Einrichtung zum Ermitteln eines Klopfintensitätssignals eines Verbrennungsmotors mit einem in den Brennraum reichenden optischen Aufnehmer und einem Photodetektor zum Wandeln des vom Aufnehmer erfaßten Lichtes in ein elektrisches Lichtsignal und mit einer Einrichtung zum Differenzieren des elektrischen Lichtsignals nach der Zeit, wobei in einer Auswerteinrichtung insbesondere zur Durchführung eines Verfahrens nach einem der Ansprüche 1 bis 11 ein Klopfintensitätssignal gebildet wird, dadurch gekennzeichnet, daß die Auswerteinrichtung (15) eine Einrichtung (31, 28) zum Ermitteln der Höhe und Lage des Maximums (25) der in der Einrichtung zum Differenzieren gebildeten ersten Ableitung des elektrischen Licht-signals umfaßt.

13. Einrichtung nach Anspruch 12, gekennzeichnet durch mindestens ein Tiefpaßfilter (13,18) mit einer Grenzfrequenz von vorzugsweise 5kHz und darunter.

14. Einrichtung nach Anspruch 13, dadurch gekennzeichnet, daß ein Tiefpaßfilter (13) vor einem Analog-Digital-Wandler (14) angeordnet ist.

15. Einrichtung nach Anspruch 13 oder 14, dadurch gekennzeichnet, daß ein Tiefpaßfilter (18) einem Analog-Digital-Wandler (14) nachgeschaltet ist.

16. Einrichtung nach einem der Ansprüche 12 bis 15, gekennzeichnet durch eine digitale Rechnereinheit (15), vorzugsweise einen Mikroprozessor, zum Differenzieren und Auswerten des elektrischen Lichtsignales.

17. Einrichtung nach Anspruch 12, gekennzeichnet durch eine Mittelungseinrichtung (29,32) zum Mitteln der Höhe und der Lage des Maximums (25) der ersten Ableitung des elektrischen Lichtsignales über mehrere Verbrennungszyklen.
